# EUROPÄISCHE PATENTSCHRIFT

(11) **EP 3 383 161 B1**
(45) Veröffentlichungstag und Bekanntmachung des Hinweises auf die Patenterteilung: **05.02.2020**
(21) Anmeldenummer: 16809688.1
(22) Anmeldetag: 02.12.2016
(51) Int. Cl.: A01C 15/00, A01C 7/20

(54) **VERTEILVORRICHTUNG**
DISTRIBUTION DEVICE
SYSTÈME DE DISTRIBUTION

(30) Priorität: 04.12.2015 DE 202015008329 U
(43) Veröffentlichungstag der Anmeldung: 10.10.2018
(73) Patentinhaber: Redexim Handel- en Exploitatie Maatschappij B.V., 3702 AC Zeist (NL)
(72) Erfinder: DE BREE, Cornelius Hermanus Maria, 3702 AC Zeist (NL)
(74) Vertreter: dompatent von Kreisler Selting Werner - Partnerschaft von Patent- und Rechtsanwälten mbB
(86) Internationale Anmeldenummer: PCT/EP2016/079579
(87) Internationale Veröffentlichungsnummer: WO 2017/093479

(56) Entgegenhaltungen:
- WO-A1-2010/064676
- WO-A2-2014/066643
- DE-A1- 4 335 692
- US-A- 2 851 200

## Beschreibung

Die Erfindung betrifft eine Verteilvorrichtung, insbesondere eine Sämaschine, nach dem Oberbegriff des Anspruchs 1 sowie ein Verfahren zum Verteilen eines Guts auf bzw. in einem Boden nach dem Oberbegriff des Anspruchs 7.

Es sind Verteilvorrichtung, insbesondere Sämaschinen, bekannt, die zumindest einen Vorratsbehälter und zumindest eine Ausbringeinrichtung aufweisen. Der Vorratsbehälter ist vorzugsweise über mindestens einen Auslasskanal mit der Ausbringeinrichtung verbunden, sodass das in dem Vorratsbehälter angeordnete Gut zu der Ausbringeinrichtung überführbar ist, so dass das Gut mittels der Ausbringeinrichtung verteilbar ist.

Verteilvorrichtungen sind offenbart in DE 43 35 692 A1, US 2 851 200 A, WO 2014/066643 A2 und WO 2010/064676 A1.

Bei solchen bisher bekannten Verteilvorrichtungen besteht jedoch zunehmend Bedarf, die Wartung zu vereinfachen.

Der Erfindung liegt daher die Aufgabe zugrunde, eine Verteilvorrichtung sowie ein Verfahren zum Verteilen eines Guts auf bzw. in einem Boden zu schaffen, bei der bzw. bei dem die Wartung der Verteilvorrichtung vereinfacht ist.

Zur Lösung dieser Aufgabe dienen die Merkmale der Ansprüche 1 und 7.

Die Erfindung sieht vor, dass die Verteilvorrichtung einen ersten und einen zweiten Teil aufweist, wobei der erste und der zweite Teil relativ zueinander bewegbar sind, so dass der Auslasskanal teilweise freilegbar ist. Die Verteilvorrichtung kann durch Bewegen des ersten Teils und des zweiten Teils zueinander von einer Arbeitsstellung in eine Wartungsstellung überführbar sein.

Dies hat den Vorteil, dass der Auslasskanal relativ leicht bei der Wartung zugänglich ist, so dass Verstopfungen leicht behoben werden können. Solche Verstopfungen treten insbesondere dann auf, wenn die Verteilvorrichtung für längere Zeit, insbesondere bei nassem Wetter, nicht benutzt wird. Das Gut, das sich noch im Auslasskanal befindet, kann dabei leicht verklumpen und es kommt zu Verstopfungen des Auslasskanals.

In dem ersten Teil kann der mindestens eine Vorratsbehälter und im zweiten Teil die mindestens eine Ausbringeinrichtung angeordnet sein.

Es kann eine Trennungsebene zwischen dem ersten und zweiten Teil verlaufen, die vorzugsweise horizontal verläuft.

Der erste und der zweite Teil können vorzugsweise in Bezug zu der Trennungsebene zueinander bewegbar sein.

Es sind mehrere Auslasskanäle in einer Reihe nebeneinander angeordnet, wobei alle Auslasskanäle der Reihe durch Bewegung des ersten Teils und des zweiten Teils zueinander freilegbar sind.

Auf diese Weise können auch bei einer Vielzahl von Auslasskanälen alle Kanäle gleichzeitig relativ einfach gesäubert werden. Durch die Bewegung des ersten und des zweiten Teils zueinander sind nicht nur die Auslasskanäle besonders leicht zugänglich, auch andere Teile der Maschine, wie beispielsweise die Ausbringeinrichtung, können leicht zugänglich sein, so dass die Wartung vereinfacht ist.

Es kann mindestens ein erster und mindestens ein zweiter Vorratsbehälter vorgesehen sein, wobei dem jeweiligen Vorratsbehälter jeweils zumindest ein Auslasskanal und zumindest eine Ausbringeinrichtung zugeordnet ist.

Durch Bewegen des ersten und des zweiten Teils zueinander kann sowohl der zumindest eine dem ersten Vorratsbehälter zugeordnete Auslasskanal als auch der dem zweiten Vorratsbehälter zugeordnete Auslasskanal freilegbar sein.

Sowohl dem ersten als auch dem zweiten Vorratsbehälter kann jeweils eine Reihe von Auslasskanälen zugeordnet sein, die jeweils durch Bewegen des ersten und des zweiten Teils zueinander freilegbar sind.

Der erste und der zweite Teil sind zueinander verschiebbar.

Dies hat den Vorteil, dass der erste und der zweite Teil mit relativ wenig Kraft zueinander bewegbar sind.

Der erste und der zweite Teil können in einer Richtung zueinander verschiebbar sein, die im Wesentlichen parallel zum Boden verläuft.

Die Richtung, die im Wesentlichen parallel zum Boden verläuft, ist eine horizontale Richtung.

Der erste und der zweite Teil können verschwenkbar zueinander sein, was aber nicht Bestandteil der beanspruchten Erfindung ist.

Der erste und der zweite Teil können um eine im Wesentlichen horizontal verlaufende Achse verschwenkbar sein, wobei die horizontale Achse im Wesentlichen parallel zum Boden verläuft, was aber nicht Bestandteil der beanspruchten Erfindung ist.

Gemäß der vorliegenden Erfindung ist ferner ein Verfahren zum Verteilen eines Guts auf bzw. in dem Boden vorgesehen, das in Anspruch 7 definiert ist.

Es ist vorgesehen, dass ein erster und ein zweiter Teil der Verteilvorrichtung zueinander bewegt werden können, sodass der zumindest eine Auslasskanal freigelegt werden kann.

Der zumindest eine freigelegte Auslasskanal kann gesäubert werden.

Der erste und der zweite Teil werden zueinander verschoben.

Der erste und der zweite Teil können im Wesentlichen in horizontaler Richtung verschoben werden.

Der erste und der zweite Teil können zueinander verschwenkt werden, was aber nicht Bestandteil der beanspruchten Erfindung ist.

Der erste und der zweite Teil können vorzuasweise um eine im wesentlichen horizontal verlaufende Achse zueinander verschwenkt werden, was aber nicht Bestandteil der beanspruchten Erfindung ist.

Im Folgenden wird unter Bezugnahme auf die Zeichnung ein Ausführungsbeispiel der Erfindung näher erläutert.

Es zeigen schematisch:
- Fig. 1: die Verteilvorrichtung gem. der vorliegenden Erfindung,
- Fig. 2: die Verteilvorrichtung gem. Fig. 1 in Wartungsstellung,
- Fig. 3: eine Detailansicht aus Fig. 2,
- Fig. 4: eine Schnittansicht der Vorrichtung gem. Fig. 1 und 2,
- Fig. 5: eine Detailansicht aus Fig. 4.

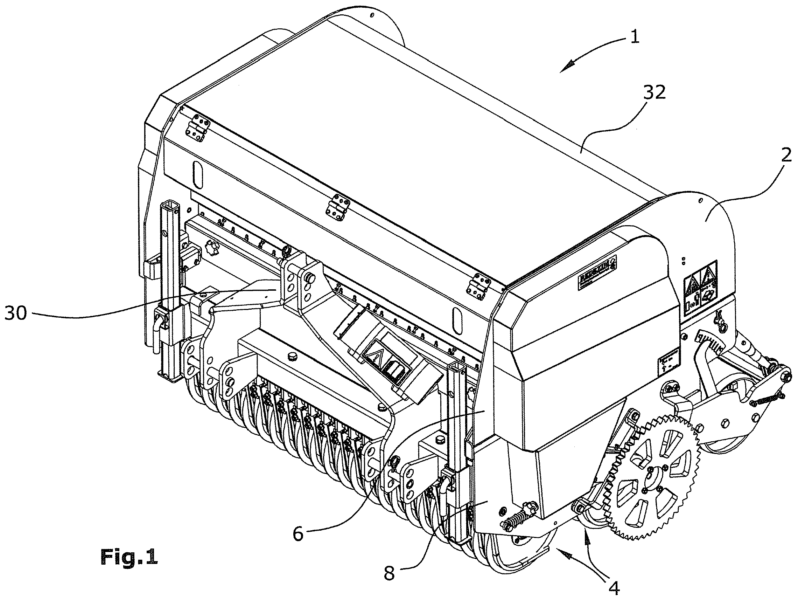

Fig. 1 zeigt eine Verteilvorrichtung 1 zum Verteilen eines Guts auf bzw. in einen Boden 5. Die Verteilvorrichtung 1 kann ein Ankoppelelement 30 aufweisen, mit dem die Verteilvorrichtung an ein Zugfahrzeug, wie beispielsweise einen Traktor, angehängt werden kann. Die Verteilvorrichtung 1 weist einen ersten Teil 6 und einen zweiten Teil 8 auf, wobei der erste Teil 6 und der zweite Teil 8 relativ zueinander bewegbar sind. Die Verteilvorrichtung weist ferner, vorzugsweise im oberen Bereich, zumindest einen Vorratsbehälter 28 auf, der in dem in Fig. 1 dargestellten Ausführungsbeispiel mit einem Gehäuse 32 verdeckt ist.

Ferner weist die Verteilvorrichtung 1 zumindest eine Ausbringeinrichtung 4 auf, mit der das Gut auf bzw. in den Boden verteilt werden kann. Der Vorratsbehälter 28 und die Ausbringeinrichtung 4 sind vorzugsweise über zumindest einen Auslasskanal 14 miteinander verbunden, sodass das in dem Vorratsbehälter angeordnete Gut zu der Ausbringeinrichtung 4 überführbar ist, so dass das Gut mittels der Ausbringeinrichtung 4 verteilbar ist.

Die Ausbringeinrichtung kann eine üblicherweise bei Sämaschinen vorgesehene Ausbringeinrichtung sein.

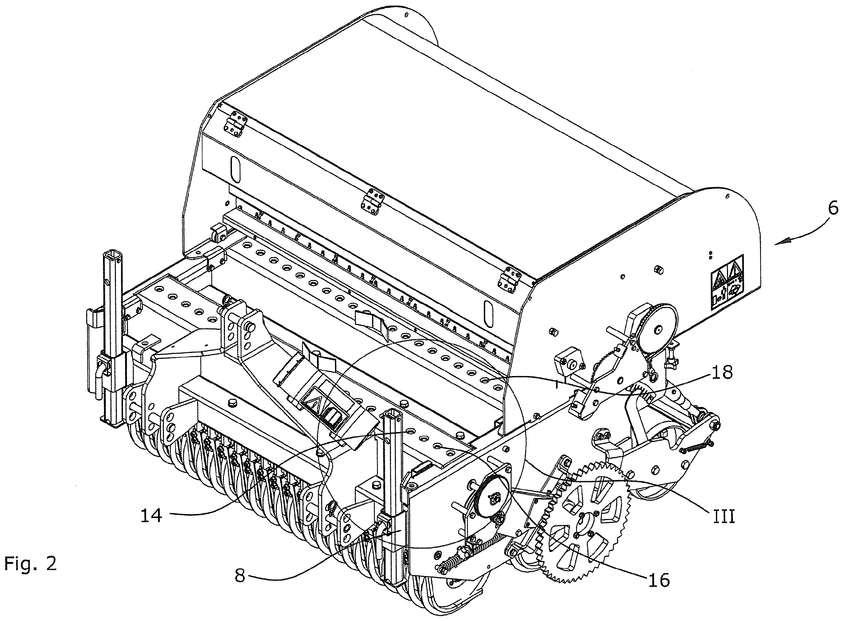

In Fig. 2 ist die Verteilvorrichtung gem. Fig. 1 dargestellt, wobei der erste Teil 6 und der zweite Teil 8 zueinander bewegt worden sind. Wie Fig. 2 zu entnehmen ist, können der erste und der zweite Teil 6, 8 derart relativ zueinander bewegbar sein, dass der Auslasskanal 14 teilweise freilegbar ist. Wie Fig. 2 zu entnehmen ist, ist bei dem dargestellten Ausführungsbeispiel eine Vielzahl von Auslasskanälen 14 in einer Reihe nebeneinander angeordnet. Es sind ferner zwei Reihen 16, 18 von nebeneinander angeordneten Auslasskanälen 14 vorgesehen. Dadurch, dass der erste Teil 6 und der zweite Teil 8 zueinander bewegt worden sind, sind beide Reihen von Auslasskanälen 16, 18 freigelegt.

Die Wartung der Verteilvorrichtung 1 kann nun sehr einfach durchgeführt werden. Insbesondere können Verstopfungen in den Auslasskanälen 14 leicht entfernt werden. Solche Verstopfungen treten häufig bei Feuchtigkeit auf, bei der das durch den Auslasskanal durchzuführende Gut aneinanderklebt. Das Gut kann rieselfähiges Gut sein. Es können Samenkörner oder Ähnliches sein. Wie Fig. 2 zu entnehmen ist, kann auch in der in Fig. 2 dargestellten Wartungsstellung relativ leicht auf die Ausbringeinrichtung 4 zugegriffen werden und diese kann auch ebenfalls relativ einfach gewartet werden.

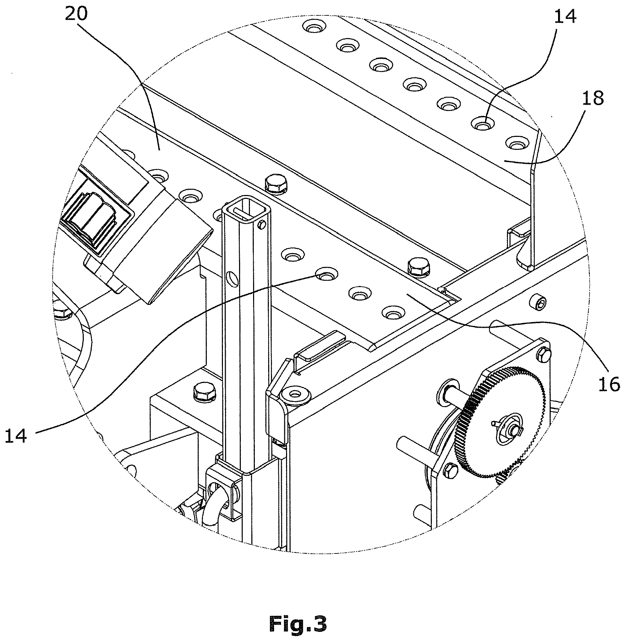

In Fig. 3 ist eine Detailansicht aus Fig. 2 dargestellt. Hier sind die Auslasskanäle 14, die an einer ersten und an einer zweiten Reihe 16, 18 angeordnet sind, deutlich zu erkennen. Es kann ferner ein zusätzliches Gewicht 20 vorgesehen sein, das neben der ersten Reihe 16 den nebeneinander angeordneten Auslasskanälen 14 angeordnet werden kann.

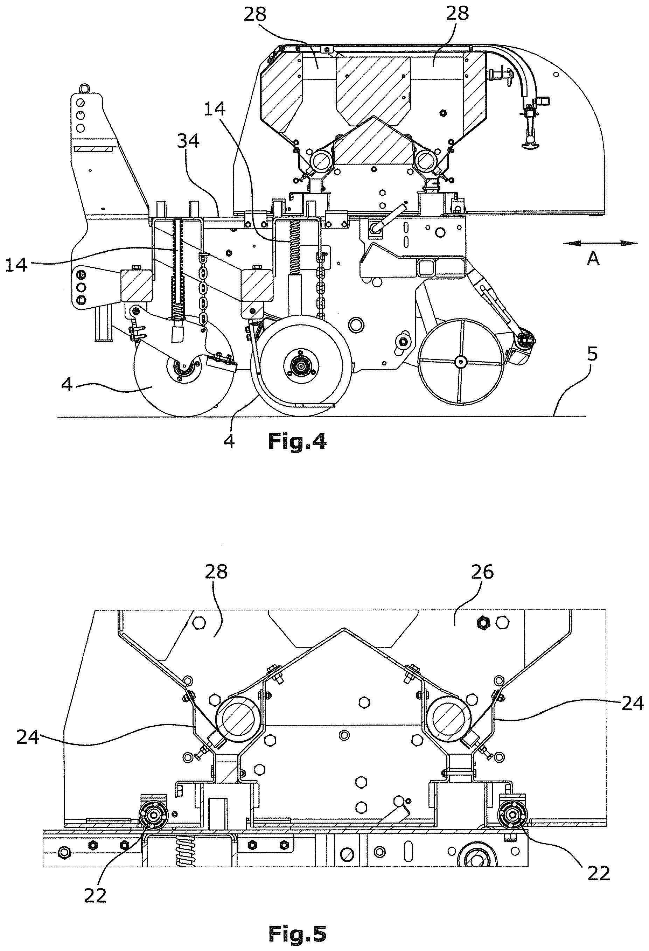

In Fig. 4 ist eine Schnittansicht der Verteilvorrichtung 1 dargestellt. Der erste Teil 6 ist gegenüber dem zweiten Teil 8 in vorzugsweise horizontaler Richtung A bewegt. Die horizontale Richtung A verläuft vorzugsweise parallel zum Boden 5. Wie Fig. 4 zu entnehmen ist, sind bei dem dargestellten Ausführungsbeispiel ein erster und ein zweiter Vorratsbehälter 28 angeordnet. Im unteren Bereich der Vorratsbehälter 28 sind Dosiereinrichtungen 24 angeordnet, mit denen das in den Vorratsbehältern 28 angeordnete Gut dosiert werden kann.

Ferner sind in Fig. 4 die Auslasskanäle 14 dargestellt, mit denen das Gut zu den Ausbringeinrichtungen 4 überführbar ist. Zwischen dem ersten und dem zweiten Teil 6, 8 verläuft eine Trennungsebene 34. Die Trennungsebene 34 verläuft vorzugsweise im Wesentlichen horizontal und damit im Wesentlichen parallel zum Boden 5.

Alternativ kann der erste Teil 6 auch gegenüber dem zweiten Teil 8 verschwenkt werden. Wobei die Verschwenkung vorzugsweise um eine im Wesentlichen horizontale Achse verlaufen. Dieses alternative Ausführungsbeispiel ist in den Figuren nicht dargestellt und ist nicht Bestandteil der beanspruchten Erfindung. Fig. 5 zeigt eine Detailansicht aus Fig. 4. Dort sind die Dosiereinrichtungen 24 näher dargestellt. Ferner sind auch die Lager 22 zu erkennen, die den ersten Teil 6 gegenüber dem zweiten Teil 8 tragen und ein leichtes Verschieben des ersten Teils 6 gegenüber dem zweiten Teil 8 ermöglichen.

Bei einem Verfahren zum Verteilen eines Guts auf bzw. in den Boden wird insbesondere ein Gut in den mindestens einen Vorratsbehälter 28 angeordnet. Das Gut wird dann vorzugsweise durch die Dosiereinrichtung 24 dosiert und in den zumindest einen Auslasskanal 14 überführt. Durch den Auslasskanal 14 wird das Gut zu der Ausbringeinrichtung 4 geführt, wobei mittels der Ausbringeinrichtung 4 das Gut auf bzw. in den Boden 5 verteilt wird. Der erste und der zweite Teil 6, 8 der Verteilvorrichtung 1 zueinander bewegt werden, so dass die Verteilvorrichtung in die Wartungsstellung überführt wird, wobei in der Wartungsstellung der zumindest eine Auslasskanal zumindest teilweise freigelegt ist.

In der Wartungsstellung, die in Fig. 4 dargestellt ist, kann der zumindest eine Auslasskanal 14 gesäubert werden. Auch andere Wartungsarbeiten, wie beispielsweise Wartungsarbeiten an der Ausbringeinrichtung 4, können ebenfalls leicht vorgenommen werden.

Ferner kann ein Verriegelungsmechanismus 40 vorgesehen sein, mit dem der erste Teil 6 und der zweite Teil 8 miteinander verriegelt werden können, sodass der erste und der zweite Teil 6, 8 nicht mehr zueinander bewegt werden können. Dies ist insbesondere in der Arbeitsstellung, wie in Fig. 1 dargestellt, der Fall. Der Verriegelungsmechanismus 40 kann gelöst werden. In der gelösten Stellung ist die Verteilvorrichtung in der Wartestellung, wobei der erste und der zweite Teil 6, 8 in der Wartestellung relativ zueinander bewegbar sind, sodass der Auslasskanal 14 teilweise freilegbar ist.

In der Wartungsstellung bedeutet, dass die Maschine in diesem Zustand gewartet und überholt und in Einzelfällen auch repariert werden kann.

## Patentansprüche

1. Verteilvorrichtung (1), insbesondere Sämaschine, zum Verteilen eines Guts, mit
- zumindest einem Vorratsbehälter (28) und
- mindestens einer Ausbringeinrichtung (4),
- wobei der Vorratsbehälter über mindestens einen Auslasskanal (14) mit der Ausbringeinrichtung verbunden ist, so dass das in dem Vorratsbehälter angeordnete Gut zu der Ausbringeinrichtung überführbar ist, so dass das Gut mittels der Ausbringeinrichtung verteilbar ist,
- wobei die Verteilvorrichtung einen ersten und einen zweiten Teil aufweist,
wobei der erste (6) und der zweite (8) Teil relativ zueinander bewegbar sind, so dass der Auslasskanal teilweise freilegbar ist, wobei mehrere Auslasskanäle in einer Reihe nebeneinander angeordnet sind, und wobei alle Auslasskanäle der Reihe durch Bewegung des ersten Teils und des zweiten Teils zueinander freilegbar sind, **dadurch gekennzeichnet, dass** der erste und der zweite Teil zueinander verschiebbar sind.

2. Verteilvorrichtung nach Anspruch 1, **dadurch gekennzeichnet, dass** in dem ersten Teil der mindestens eine Vorratsbehälter und in dem zweiten Teil die mindestens eine Ausbringeinrichtung angeordnet ist.

3. Verteilvorrichtung nach Anspruch 1 oder 2, **dadurch gekennzeichnet, dass** eine Trennungsebene zwischen dem ersten und dem zweiten Teil verläuft, die vorzugsweise horizontal verläuft.

4. Verteilvorrichtung nach einem der Ansprüche 1 bis 3, **dadurch gekennzeichnet, dass** mindestens ein erster und mindestens ein zweiter Vorratsbehälter vorgesehen sind, wobei dem jeweiligen Vorratsbehälter jeweils zumindest ein Auslasskanal und zumindest einer Ausbringeinrichtung zugeordnet ist.

5. Verteilvorrichtung nach Anspruch 4, **dadurch gekennzeichnet, dass** durch Bewegen des ersten und des zweiten Teils zueinander sowohl der zumindest eine dem ersten Vorratsbehälter zugeordnete Auslasskanal als auch der dem zweiten Vorratsbehälter zugeordnete Auslasskanal freilegbar ist.

6. Verteilvorrichtung nach einem der Ansprüche 1 bis 5, **dadurch gekennzeichnet, dass** der erste und der zweite Teil in einer Richtung zueinander verschiebbar sind, die im Wesentlichen parallel zum Boden verläuft.

7. Verfahren zum Verteilen eines Guts auf bzw. in einem Boden, durch
- Anordnen von dem Gut in zumindest einem Vorratsbehälter (28) einer Verteilvorrichtung (1),
- Führen des Guts über zumindest einen Auslasskanal (14) der Verteilvorrichtung zu zumindest einer Ausbringeinrichtung (4) der Verteilvorrichtung, wobei mittels der Ausbringeinrichtung das Gut auf bzw. in dem Boden verteilt wird, wobei ein erster (6) und ein zweiter (8) Teil der Verteilvorrichtung zueinander bewegt werden können, so dass der zumindest eine Auslasskanal freigelegt werden kann, wobei mehrere Auslasskanäle in einer Reihe nebeneinander angeordnet sind, und wobei alle Auslasskanäle der Reihe durch Bewegung des ersten Teils und des zweiten Teils zueinander freigelegt werden, **dadurch gekennzeichnet, dass** der erste und der zweite Teil zueinander verschoben werden.

8. Verfahren nach Anspruch 7, **dadurch gekennzeichnet, dass** der zumindest ein freigelegter Auslasskanal gesäubert wird.

9. Verfahren nach Anspruch 7 oder 8, **dadurch gekennzeichnet, dass** der erste und der zweite Teil in im Wesentlichen horizontaler Richtung verschoben werden.

## Claims

1. Distribution device (1), in particular a sowing machine, for distributing a good, comprising:
- at least one storage container (28) and
- at least one discharge apparatus (4),
- wherein the storage container is connected to the discharge apparatus by means of at least one outlet channel such that the good arranged in the storage container can be transferred to the discharge apparatus such that the good can be distributed by means of the discharge apparatus,
- wherein the distribution device has a first and a second part,
wherein the first (6) and the second part (8) can be moved in relation to each other such that the outlet channel can be partially exposed, and
wherein a plurality of outlet channels is arranged one beside the other in a row, all outlet channels of the row being exposable by movement of the first and the second part in relation to each other,
**characterized in that** the first and the second part are slidable in relation to each other.

2. Distribution device of claim 1, **characterized in that** the at least one storage container is arranged in the first part and the at least one discharge apparatus is arranged in the second part.

3. Distribution device of claim 1 or 2, **characterized in that** a separating plane extends between the first and the second part, the plane preferably extending in the horizontal direction.

4. Distribution device of one of claims 1 to 3, **characterized in that** at least one first and at least one second storage container are provided, a respective storage container having at least one outlet channel and at least one discharge apparatus associated thereto, respectively.

5. Distribution device of claim 4, **characterized in that** by moving the first and the second part in relation to each other, both the at least one outlet channel associated to the first storage container and the outlet channel associated to the second storage container can be exposed.

6. Distribution device of one of claims 1 to 5, **characterized in that** the first and the second part are slidable in relation to each other in a direction that is substantially parallel to the ground.

7. Method for distributing a good on or in the ground, by:
- arranging the good in at least one storage container (28) of a distribution device,
- guiding the good to at least one discharge apparatus (4) via at least one outlet channel (14) of the distribution device, the good being distributed on or in the ground by means of the discharge apparatus,
wherein a first part (6) and a second part (8) of the distribution device are movable in relation to each other so that the at least one outlet channel can be exposed, wherein a plurality of outlet channels is arranged one beside the other in a row, all outlet channels of the row being exposed by movement of the first and the second part in relation to each other, **characterized in that** the first and the second part are slid in relation to each other.

8. Method of claim 7, **characterized in that** the at least one exposed discharge channel is cleaned.

9. Method of claim 7 or 8, **characterized in that** the first and the second part are displaced substantially in the horizontal direction.

## Revendications

1. Dispositif de distribution (1), en particulier semoir, destiné à distribuer un produit, doté
- d'au moins un réservoir (28) et
- d'au moins un moyen de décharge (4),
- dans lequel le réservoir est relié au moyen de décharge par le biais d'au moins un canal de sortie (14), de sorte que le produit agencé dans le réservoir peut être transféré au moyen de décharge, de sorte que le produit peut être distribué au moyen du moyen de décharge,
- dans lequel le dispositif de distribution comporte une première et une deuxième partie, dans lequel la première (6) et la deuxième (8) partie sont mobiles relativement l'une à l'autre, de sorte que le canal de sortie peut être partiellement dégagé, dans lequel plusieurs canaux de sortie sont agencés sur un rang de manière contiguë, et dans lequel tous les canaux de sortie du rang peuvent être dégagés par un mouvement de la première partie et de la deuxième partie l'une par rapport à l'autre, **caractérisé en ce que** la première et la deuxième partie peuvent coulisser l'une par rapport à l'autre.

2. Dispositif de distribution selon la revendication 1, **caractérisé en ce que** l'au moins un réservoir est agencé dans la première partie et l'au moins un moyen de décharge dans la deuxième partie.

3. Dispositif de distribution selon la revendication 1 ou 2, **caractérisé en ce qu'**un plan de séparation se trouve entre la première et la deuxième partie, de préférence horizontal.

4. Dispositif de distribution selon l'une des revendications 1 à 3, **caractérisé en ce qu'**au moins un premier et au moins un deuxième réservoir sont prévus, dans lequel au moins un canal de sortie et au moins un moyen de décharge sont respectivement ordonnés au réservoir respectif.

5. Dispositif de distribution selon la revendication 4, **caractérisé en ce que** l'au moins un canal de sortie ordonné au premier réservoir ainsi que le canal de sortie ordonné au deuxième réservoir peuvent être dégagés par le mouvement de la première et de la deuxième partie l'une par rapport à l'autre.

6. Dispositif de distribution selon l'une des revendications 1 à 5, **caractérisé en ce que** la première et la deuxième partie peuvent coulisser l'une par rapport à l'autre dans une direction essentiellement parallèle au sol.

7. Procédé de distribution d'un produit sur ou dans un sol, par
- agencement du produit dans au moins un réservoir (28) d'un dispositif de distribution (1),
- guidage du produit par le biais d'au moins un canal de sortie (14) du dispositif de distribution vers au moins un moyen de décharge (4) du dispositif de distribution, dans lequel le produit est distribué sur ou dans un sol au moyen du moyen de décharge, dans lequel une première (6) et une deuxième (8) partie du dispositif de distribution peuvent être mues l'une par rapport à l'autre, de sorte que l'au moins un canal de sortie peut être dégagé, dans lequel plusieurs canaux de sortie sont agencés sur un rang de manière contiguë, et dans lequel tous les canaux de sortie du rang sont dégagés par un mouvement de la première partie et de la deuxième partie l'une par rapport à l'autre, **caractérisé en ce que** la première et la deuxième partie sont coulissées l'une par rapport à l'autre.

8. Procédé selon la revendication 7, **caractérisé en ce que** l'au moins un canal de sortie dégagé est nettoyé.

9. Procédé selon la revendication 7 ou 8, **caractérisé en ce que** la première et la deuxième partie sont coulissées dans une direction essentiellement horizontale.
